# EUROPEAN PATENT APPLICATION

(11) **EP 1 918 927 A2**
(43) Date of publication of application: **07.05.2008**
(21) Application number: 07020714.7
(22) Date of filing: 23.10.2007
(51) Int. Cl.: G11B 19/12

(54) **Method and system for blu-ray/HD-DVD chip**

(30) Priority: 30.10.2006 US 863509 P; 10.10.2007 US 870199
(71) Applicant: Broadcom Corporation, Irvine, CA 92617 (US)
(72) Inventor: Grearson, Doug, Andover, MA 01810 (US); Payson, Chris, Bolton, 01740 MA (US); Giacalone, Glenn, 01886 Westford, MA (US); Schumann, Reinhard, 03833 Exeter, NH (US); Wu, David Chaohua, 92111 San Diego, California (US); Hellman, Tim, 01742 Concord, MA (US)
(74) Representative: Jehle, Volker Armin

(57) **Abstract**

In one embodiment, there is presented an integrated circuit. The integrated circuit comprises a transport processor and a host processor. The transport processor parses a media stream. The host processor determines whether a media stream is Blu-ray or HD DVD and configures the transport processor based on whether the media stream is Blu-ray or HD DVD.

## Description

### CROSS-REFERENCE TO RELATED APPLICATIONS/INCORPORATION BY REFERENCE

This application claims priority to "Method and System for a Blu-Ray/HD-DVD Chip", Provisional Application for U.S. Patent, Serial No. 60/863,509 , filed October 30, 2006 by Hellman, et. al., and hereby incorporated herein by reference in its entirety.

### BACKGROUND OF THE INVENTION

With the development of optical disk technology, larger amounts of audio and/or video data may be stored in a single disk when compared to other technologies such as magnetic recording, for example. Recent developments continue to expand the capabilities of optical disks by enabling higher data storage capacity within a single disk. For example, Blu-ray optical disk technology may utilize blue lasers to read and write to the disc. A Blu-ray disc may store substantially more data than, for example, a digital versatile disk (DVD) or a compact disk (CD), because of the shorter wavelength, approximately 405 nm, of the blue laser compared to the 650'nm wavelength for red lasers used by DVDs and the 780 nm wavelength for infrared lasers used by CDs. The use of shorter wavelengths enables more information to be stored digitally in the same amount of space. In comparison to high-definition digital versatile disk (HD DVD), which also uses a blue laser, Blu-ray technology may enable more information capacity per optical disk layer.

The emergence of two competing standards poses compatibility problems for playback systems. For example, a playback system that plays back HD DVD discs may not play back Blu-ray discs. Similarly, a playback system that plays back Blu-ray discs may not play back HD DVD discs.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for a Blu-Ray/HD DVD chip, substantially as shown in and/or described in connection with at least one of the figures, as set forth more completely in the claims.
According to an aspect of the invention, an integrated circuit for playing back media is provided, said integrated circuit comprising:
a transport processor for parsing a media stream; and
a host processor for determining whether a media stream is Blu-ray or HD DVD and configuring the transport processor based on whether the media stream is Blu-ray or HD DVD.
Advantageously, the transport processor further comprises:
a memory for storing a plurality of instructions, said plurality of instructions comprising a first plurality of instructions for parsing the media stream if the media stream is Blue-ray and a second plurality of instructions for parsing the media stream if the media stream is HV-DVD; and
a controller for executing either the first plurality of instructions if the host processor determines the media stream is Blue-ray or the second plurality of instructions if the host processor determines the media stream is HD-DVD.
Advantageously, the transport processor further comprises:
a controller for processing a transport stream; and
a parser for receiving the transport stream if said media stream is HD DVD, and receiving a program stream and converting said program stream to the transport stream if said media stream is Blu-Ray.
Advantageously, the integrated circuit further comprises:
a security circuit for decrypting the media stream; and
wherein the host processor configures the security controller based on whether the media is Blu-ray or HD DVD.
Advantageously, the integrated circuit further comprises:
audio decoder circuitry for decoding audio data from the media stream; and
wherein the host processor configures the audio decoder based on whether the media is Blu-ray or HD DVD.
Advantageously, the integrated circuit further comprises:
a still image decoder for decoding still images from the media stream; and
wherein the host processor configures the still picture decoder based on whether the media is Blu-ray or HD DVD.
According to an aspect of the invention, a transport processor for processing a media stream is provided, said transport processor comprising:
a controller for processing a transport stream; and
a parser for receiving the transport stream if said media stream is HD DVD, and receiving a program stream and converting said program stream to the transport stream if said media stream is Blu-Ray.
Advantageously, the transport processor further comprises a playback DMA for accessing the transport stream or the program stream.
Advantageously, the transport processor further comprises:
a program memory for storing a plurality of instructions that are executable by the controller.
According to an aspect of the invention, a transport processor for parsing a media stream is provided, said transport processor comprising:
a first memory portion storing a first program, said first program for parsing a transport stream;
a second memory portion storing a second program, said second program for parsing a program stream; and
a controller for executing one of the first program or second program.
According to an aspect of the invention, a method for playing back media is provided, said method comprising:
detecting whether a media stream is Blu-ray or HD DVD;
configuring a transport processor based on whether the media stream is Blu-ray or HD DVD.
Advantageously, configuring the transport processor further comprises:
Converting a program stream to a transport stream if said media is Blu-Ray.
Advantageously, said method further comprises:
configuring a security controller based on whether the media is Blu-ray or HD DVD.
Advantageously, said method further comprises:
configuring an audio decoder based on whether the media is Blu-ray or HD DVD.
Advantageously, said method further comprises:
configuring a still picture decoder based on whether the media is Blu-ray or HD DVD.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

**FIGURE 1** is a block diagram of an exemplary integrated circuit in accordance with an embodiment of the present invention;

**FIGURE 2** is a block diagram of an exemplary transport processor in accordance with an embodiment of the present invention;

**FIGURE 3** is a block diagram of an exemplary integrated circuit in accordance with an embodiment of the present invention;

**FIGURE 4** is a block diagram of an exemplary integrated circuit in accordance with an embodiment of the present invention; and

**FIGURE 5** is a flow chart for playing back media in accordance with an embodiment of the present invention.

### DETAILED DESCRIPTION OF THE INVENTION

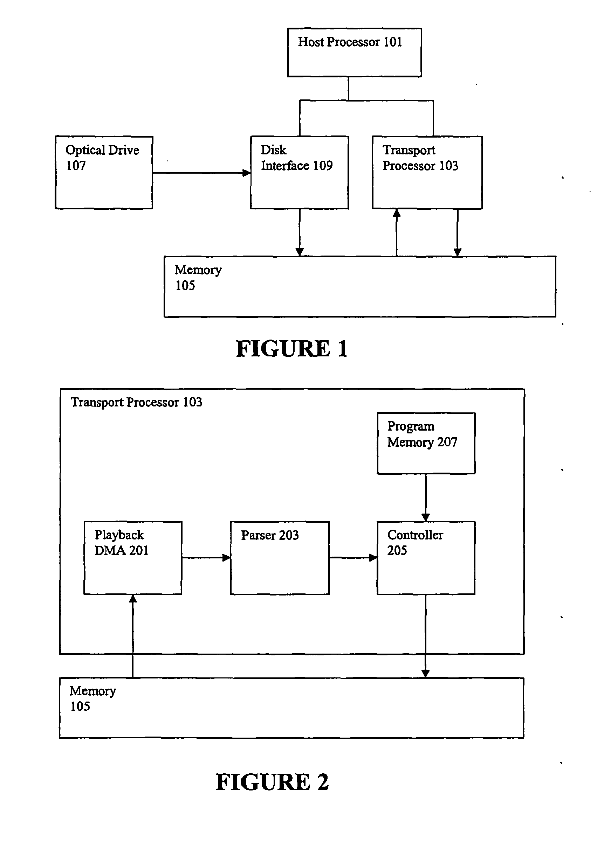

Referring now to **FIGURE 1,** there is illustrated a block diagram of an exemplary integrated circuit in accordance with an embodiment of the present invention. The integrated circuit comprises a host processor 101, transport processor 103, and disk interface 105. The integrated circuit interfaces with an optical disk drive 107 and a memory 105. The disk interface 105, under the control of the host processor 101, causes a media stream, which is either Blu-ray or HD DVD, to be transferred from the optical drive 107 to the memory 105. The transport processor 103 reads the media stream from memory 105. Depending on the type of stream that is received, the host processor 101 configures the transport processor 103 to parse the stream.

It is noted that Blu-ray uses transport stream packets while HD DVD uses program stream packets. Accordingly, if the media is Blu-ray, the host processor 101 configures the transport processor 103 to parse transport stream packets. If the media is HD DVD, the host processor 101 configures the transport processor 103 to parse program stream packets.

Referring now to **FIGURE 2**, there is illustrated a block diagram of an exemplary transport processor. The transport processor 103 comprises a controller 201, a program memory 207, a playback DMA circuit 201 and a parser circuit 203. The parser circuit 203 determines the type of packet, and passes the information to the controller which determines the proper output memory buffer for the data.

As noted above, Blu-ray uses transport stream packets while HD DVD uses program stream packets. Accordingly, the parser circuit 203 can be configured to parse either transport stream packets or program stream packets.

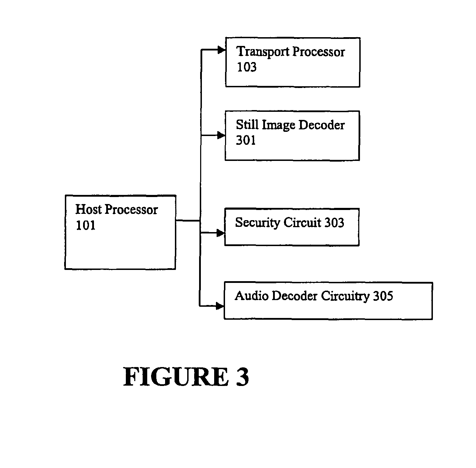

Referring now to **FIGURE 3**, there is illustrated a block diagram of an exemplary integrated circuit in accordance with an embodiment of the present invention. The integrated circuit comprises a host processor 101, a transport processor 103, a still image decoder 301, a security circuit 303, and an audio decoder circuitry 305.

The transport processor 103 is capable of parsing both Blu-ray and HD DVD media. The still image decoder 301 is capable of decoding still images for both Blu-ray and HD DVD. The security circuit 303 is capable of decrypting both Blu-ray and HD DVD media. The audio decoder circuitry 305 is capable of decoding audio media from both Blu-ray and HD DVD media. The host processor 101 configures the transport processor 103, still image decoder 301, security circuit 303 and the audio decoder circuitry 305 based on whether a received media stream is Blu-ray or HD DVD.

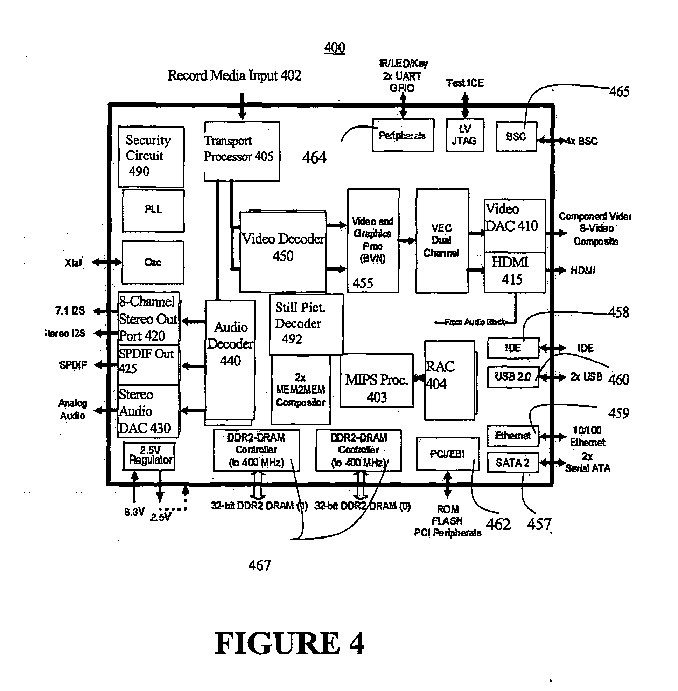

Referring now to **FIGURE 4**, there is illustrated a block diagram of an exemplary DVD integrated circuit 400 in accordance with an embodiment of the present invention. The integrated circuit 400 can provided a highly integrated silicon platform for High Definition DVD players. It may be also be used in conjunction with a separate video encoder.

The integrated circuit 400 receives a media stream over disk interface SATA 457 or IDE 458 that can be either Blu-ray or HD DVD. The media can include audio and video, as well as data. The video data can be output in Component Video, Composite Video or S-Video via video digital to analog converter (DAC) 410, and HDMI via HDMI output port 415. The analog data can be output in 7.1 Channel Output format or Stereo I2S format via 8 Channel/Stereo output port 420, SPDIF format from SPDIF output port 425, and analog via Stereo Audio Digital Audio Converter 430.

The integrated circuit 400 can include a core processor 403, such as, for example, a 4350 dual-thread MIPS processor supporting Blu-ray, HD DVD and BD graphics, HD DVD and BD Navigation, interconnectivity, content protection and decryption, and JAVA support. The core processor can include read ahead cache (RAC) 404 for performance. The integrated circuit 400 also includes a security circuit 490, still picture decoder 492, and audio decoder 440.

The transport processor 405 receives a media stream from memory through DDR2 DRAM controller 467 and is capable of parsing both Blu-ray media streams and HD DVD media streams. The processor 403 determines whether the media stream is Blu-ray or HD DVD and configures the transport processor 405. The transport processor 405 is also capable of receiving media streams from an external input 402, such as from a video encoder chip.

The security circuit 490 can decrypt both Blu-ray media streams and HD DVD media streams. The processor 403 determines whether the media stream is Blu-ray or HD DVD and configures the security circuit 490.

The still picture decoder 492 can decode still pictures from both Blu-ray media streams and HD DVD media streams. The processor 403 determines whether the media stream is Blu-ray or HD DVD and configures the still picture decoder 492.

The audio decoder 440 can decode audio data from both Blu-ray media streams and HD DVD media streams. The processor 403 determines whether the media stream is Blu-ray or HD DVD and configures the audio decoder 440.

### VIDEO DECODER

The video decoder 450 decodes video elementary streams provided in a memory buffer from the transport processor 405. The video decoder 450 can transition from one selected video elementary stream to another. In certain embodiments of the present invention, the video decoder 450 is operable to detect a marker indicating a change of selected video elementary stream. Responsive thereto, the video decoder 450 changes the codec associated with the previously selected video elementary stream to a codec associated with the newly selected video elementary stream. In certain embodiments, the arrival of the marker at the video decoder 450 can cause an interrupt. The interrupt can cause the video decoder 450 to switch to the appropriate codec.

The video decoder 450 can be equipped with codecs to decode video data compressed in accordance with Advanced Video Coding (AVC, also known as H.264, and MPEG-4, Part 10), SMPTE VC-1 Advanced Profile Level 4, SMPTE VC-1 Simple Profile to Medium Level, and SMPTE VC-1 Main Profile to High Level. The video decoder 450 can be capable of simultaneous single high definition and standard definition decoding.

The video decoder 450 provides video frame memory buffers to a video and graphics processor 455. In certain embodiments, the video and graphics processor 455 can provide any of the following features:
- Hardware support for two content (Primary and secondary video) and 2 user interaction-driven 2D graphics planes (Interactive and Presentation Graphics) with full HD resolution
- Vendor OSD graphics overlay plane (in addition to the two planes described above), overlays all graphics and video planes)
- Alpha-blending capabilities on all planes
- Simultaneous support for HD and SD output of the same content and graphics
- Select between overlay plane only or scaled version of composite output for secondary outputs
- Video Scaler: Horizontal and vertical with programmable zooming (frame by frame); independently configured for each video stream
- HD DVD Clear Rect Function on secondary video plane
- Motion adaptive de-interlacer
- Main Output Compositor with five inputs

A single output image is then sent to the VEC (video encoder) which converts it to the various analog and digital output formats (composite video, S-video, RF video, component video, HDMI, DVI, etc).

### Audio Decoder

The audio decoder 440 reads from memory and decodes the audio data from the selected audio elementary streams and provides the decoded audio data to the 8 Channel/Stereo output port 420, SPDIF output port 425, and Stereo Audio Digital Audio Converter 430.

The audio decoder 440 decodes audio elementary streams provided in a memory buffer from the transport processor 405. The audio decoder 440 can transition from one selected audio elementary stream to another. In certain embodiments of the present invention, the audio decoder 440 is operable to detect a marker indicating a change of selected audio elementary stream. Responsive thereto, the audio decoder 440 changes the codec associated with the previously selected audio elementary stream to a codec associated with the newly selected audio elementary stream. In certain embodiments, the arrival of the marker at the audio decoder 440 can cause an interrupt. The interrupt can cause the audio decoder 440 to switch to the appropriate codec.

The audio decoder 440 can include any of the following features:
Audio Standards
   - LPCM to 7.1 channels
   - MPEG audio
   - MPEG-1 Layer I11 (MP3) to stereo
   - Dolby Digital (AC3) to 5.1 channels
   - Dolby Digital Plus to 7.1 channels
   - Dolby TrueHD MLP (Compressed LPCM) - DTS to 5.1 channels DTS - HD to 7.1 channels
   - MPEG-4 High-Efficiency AAC to 5.1 channels WMA Pro LPCM
   - MLP (Compressed LPCM) aka Dolby TrueHD - AAC-HE (IP-STB)

- Dolby Digital multi-channel Bass Management support, with equivalent support for DTS
- PCM audio mixing and post processing- Primary and Secondary decoded streams with:
   - Audio clips input over Host I/F or from stream input
   - Individually controlled mixing and fading
- PCM audio mixing and post-processing
   - Mix primary and secondary decoded
      streams with effects sounds (PCM)
   - Individually controlled mixing and fading
- Re-encode result of mixed primary and secondary programs and PCM effects for S/PDIF or HDMI output:
   - Formats: AC-3 5.1, DTS 5.1

The integrated circuit 400 can include a number of system interfaces, including, for example, Dual SATA interfaces 457, Parallel IDE interface 458, 10/100 Base T Ethernet Port 459, Dual USB 2.0 host ports 460, PCI v2.2 33-MHz Master/Target interface/EBI Parallel Bus 462, Dual UART interface/GPIO/User interface pins 464, Serial Controller (SC) ports 465, NAND flash support. The integrated circuit 400 can also include a number of memory interfaces, such as DDR Interfaces 467.

The integrated circuit 400 can also include a power down mode that reduces the power consumption from the active state by a minimum of 90% or the level required by phase 2 of the EnergyStar specification for DVD devices (< 1 Watt). In the foregoing state, the processor and user interface remain active. The integrated circuit 400 can also include a voltage regulator that provides 2.5V from a 4.3V input and outputs it on a power pin for use on the integrated circuit 2.5 inputs.

Various embodiments of the invention comprise a complete system-on-a-chip (SoC) solution that combines both Blu-ray and HD DVD optical disc formats into a highly integrated, single-chip design. The single chip Blu-ray/HD DVD SoC solution provides a next-generation universal player SoC that not only significantly surpasses current chip technology in integration and performance but furthers the advancement of high definition media players. The single chip Blu-ray/HD DVD SoC (or the chip) solution comprises an advanced feature set, coupled with a software stack compliant with both Blu-ray and HD DVD specifications, that provides OEMs with a complete platform for Blu-ray and HD DVD media players. This combined Blu-ray/HD DVD solution provides a foundation for future-generation media players that support both disc formats, as well as other home entertainment and network applications.

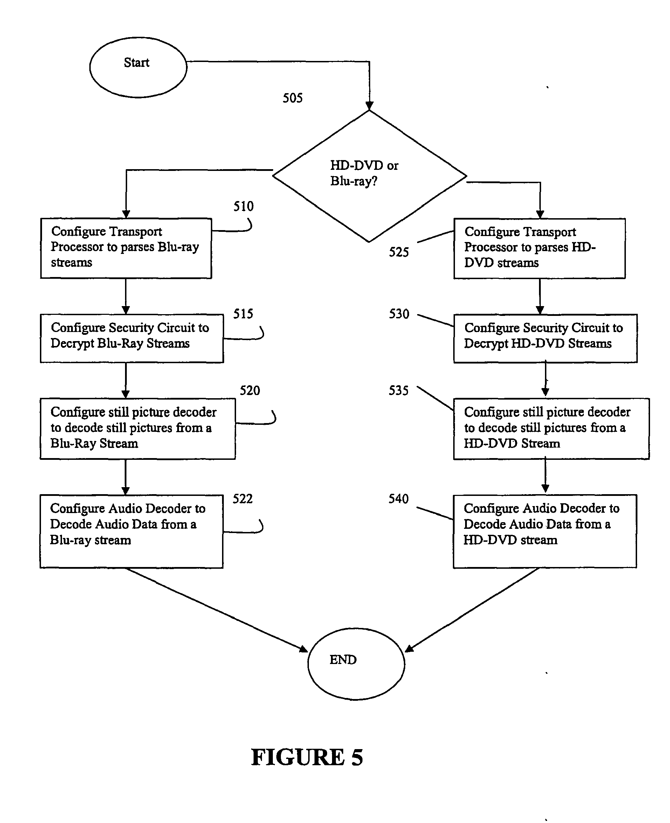

Referring now to **FIGURE 5**, there is illustrated a flow diagram for playing back a media stream in accordance with an embodiment of the present invention. At 505, the host processor 403 determines whether the media stream is Blu-ray or HD DVD.

If at 505, the host processor 403 determines the media stream is Blu-ray, the host processor 403 configures (510) the transport processor 405 to parse Blu-ray streams, the security circuit 490 to decrypt Blu-ray streams (515), the still picture decoder 492 to decode still pictures from a Blu-Ray stream (520), and the audio decoder 440 to decode audio data from a Blu-ray stream (522).

If at 505, the host processor 403 determines the media stream is HD DVD, the host processor 403 configures (525) the transport processor 405 to parse HD DVD streams, the security circuit 490 to decrypt HD DVD streams (530), the still picture decoder 492 to decode still pictures from a HD DVD stream (535), and the audio decoder 440 to decode audio data from a HD DVD stream (540).

While the present invention has been described with reference to certain embodiments, it will be understood by those skilled in the art that various changes may be made and equivalents may be substituted without departing from the scope of the present invention.

Additionally, many modifications may be made to adapt a particular situation or material to the teachings of the present invention without departing from its scope.

Therefore, it is intended that the present invention not be limited to the particular embodiment disclosed, but that the present invention will include all embodiments falling within the scope of the appended claims.

## Claims

1. An integrated circuit for playing back media, said integrated circuit comprising:
a transport processor for parsing a media stream; and
a host processor for determining whether a media stream is Blu-ray or HD DVD and configuring the transport processor based on whether the media stream is Blu-ray or HD DVD.

2. The integrated circuit of claim 1, wherein the transport processor further comprises:
a controller for processing a transport stream; and
a parser for receiving the transport stream if said media stream is HD DVD, and receiving a program stream and converting said program stream to the transport stream if said media stream is Blu-Ray.

3. The integrated circuit of claim 1, wherein the integrated circuit further comprises:
a security circuit for decrypting the media stream; and
wherein the host processor configures the security controller based on whether the media is Blu-ray or HD DVD.

4. The integrated circuit of claim 1, further comprising:
audio decoder circuitry for decoding audio data from the media stream; and
wherein the host processor configures the audio decoder based on whether the media is Blu-ray or HD DVD.

5. The integrated circuit of claim 1, further comprising:
a still image decoder for decoding still images from the media stream; and
wherein the host processor configures the still picture decoder based on whether the media is Blu-ray or HD DVD.

6. A transport processor for processing a media stream, said transport processor comprising:
a controller for processing a transport stream; and
a parser for receiving the transport stream if said media stream is HD DVD, and receiving a program stream and converting said program stream to the transport stream if said media stream is Blu-Ray.

7. The transport processor of claim 6, wherein the transport processor further comprises a playback DMA for accessing the transport stream or the program stream.

8. The transport processor of claim 6, further comprising:
a program memory for storing a plurality of instructions that are executable by the controller.

9. A transport processor for parsing a media stream, said transport processor comprising:
a first memory portion storing a first program, said first program for parsing a transport stream;
a second memory portion storing a second program, said second program for parsing a program stream; and
a controller for executing one of the first program or second program.

10. A method for playing back media, said method comprising:
detecting whether a media stream is Blu-ray or HD DVD;
configuring a transport processor based on whether the media stream is Blu-ray or HD DVD.
